# EUROPEAN PATENT APPLICATION

(11) **EP 4 311 010 A1**
(43) Date of publication of application: **24.01.2024**
(21) Application number: 22822831.8
(22) Date of filing: 26.10.2022
(51) Int. Cl.: H01M 50/528

(54) **BATTERY, BATTERY MODULE AND BATTERY PACK**

(30) Priority: 02.06.2022 CN 202210626354; 02.06.2022 CN 202221374021 U
(71) Applicant: Eve Power Co., Ltd., Jingmen, Hubei 448000 (CN); HUIZHOU EVE POWER CO., LTD, Huizhou, Guangdong 516039 (CN)
(72) Inventor: WU, Di, Jingmen, Hubei 448000 (CN); LI, Kaibo, Jingmen, Hubei 448000 (CN); CHEN, Feng, Jingmen, Hubei 448000 (CN); HE, Wei, Jingmen, Hubei 448000 (CN); LIU, Jincheng, Jingmen, Hubei 448000 (CN)
(74) Representative: Murgitroyd & Company
(86) International application number: PCT/CN2022/127668
(87) International publication number: WO 2023/231282

(57) **Abstract**

A battery, a battery module, and a battery pack are provided in the present application. The battery provided in the present application includes a housing and a negative electrode current collector disk. The negative electrode current collector disk is disposed inside the housing, and the negative electrode current collector disk is welded with the housing inside the housing before the housing is sealed.

## Description

### CROSS-REFERENCE TO RELATED APPLICATIONS

This application claims priority to Chinese Patent Application Serial No. 202210626354.1, filed on June 2, 2022, and Chinese Patent Application No. 202221374021.6, filed on June 2, 2022, both of which are herein incorporated by reference in their entireties.

### TECHNICAL FIELD

The present application relates to the field of battery technologies, for example, to a battery, a battery module, and a battery pack.

### BACKGROUND

For battery users, large cylindrical batteries are capable of saving a number of elements, and further improving production efficiency and assembly efficiency of the batteries. A negative electrode current collector disk and a housing of each of the cylindrical batteries are generally made of steel, and the housing is electrically connected with the negative electrode current collector disk by welding in production processes of the batteries. However, a welding mark may be formed on a surface of the steel after the steel is welded. The welding mark is different from a base material of the steel in material and self-chemical potentials, and galvanic corrosion is easy to occur in a presence of electrolytes or in a humid environment. If there is a humid environment during storage and transportation of the batteries, a prerequisite of the galvanic corrosion is formed, the welding mark will be corroded, and corrosion of the welding mark will cause potential risks to an overall safety and service life of the batteries.

Therefore, there is an urgent need to provide a battery, a battery module, and a battery pack to solve technical problems mentioned above.

### SUMMARY

A battery is provided in the present application to isolate a welding mark of a negative electrode current collector disk and a housing from an external environment, thereby improving a safety and service life of the battery.

A battery module is provided in the present application to prevent the welding mark from being corroded, thereby improving a safety and service life of the battery module.

A battery pack is provided in the present application to prevent the welding mark from being corroded, thereby improving a safety and service life of the battery pack.

In a first aspect, a battery is provided in the present application, including:
a housing; and
a negative electrode current collector disk disposed inside the housing, and the negative electrode current collector disk is welded with the housing inside the housing before the housing is sealed.

In a second aspect, a battery module is provided in the present application, including the battery mentioned above.

In a third aspect, a battery pack is provided in the present application, including at least one group of the battery module mentioned above.

Beneficial effects of the present application are that:
According to the battery provided in the present application, the negative electrode current collector disk is welded with the housing inside the housing before the housing is sealed, so as to isolate the welding mark of the negative electrode current collector disk and the housing from the external environment outside the housing, thereby preventing the welding mark from being corroded in a humid environment, and ensuring the safety and the service life of the battery.

The battery module provided by the present application adopts the battery mentioned above to prevent the welding mark from being corroded in the humid environment, thereby ensuring the safety and the service life of the battery module.

The battery pack provided by the present application adopts the battery module mentioned above to prevent the welding mark from being corroded in the humid environment, thereby ensuring the safety and the service life of the battery pack.

### BRIEF DESCRIPTION OF THE DRAWINGS

FIG. 1 is an exploded view of a battery provided in an embodiment of the present application.
FIG. 2 is a first sectional view of the battery provided in an embodiment of the present application.
FIG. 3 is a second sectional view of the battery provided in an embodiment of the present application.
FIG. 4 is a partial enlarged view of part C in FIG. 3.
FIG. 5 is a partial enlarged view of part A in FIG. 2.
FIG. 6 is a first schematic structural view of a negative electrode current collector disk provided in an embodiment of the present application.
FIG. 7 is a second schematic structural view of the negative electrode current collector disk provided in an embodiment of the present application.
FIG. 8 is a sectional view of the battery provided in another embodiment of the present application.
FIG. 9 is a partial enlarged view of part B in FIG. 8.

Reference numerals:
1, negative electrode current collector disk; 11, tab connector; 111, battery cell avoidance grooves; 112, tab extending end; 1121, chamfer; 113, reinforcing bump; 114, avoidance hole; 12, housing connector; 121, buffer ripple;
2, housing; 21, first rolling groove; 211, first rolling groove edge; 212, second rolling groove edge; 2121, welding step; 213, first bent groove wall; 22, second rolling groove; 221, third rolling groove edge; 222, fourth rolling groove edge; 223, second bent groove wall;
3, sealing element;
4, first sealing ring; 41, protective tongue;
5, battery cell; 51, annular groove;
6, terminal pole; 61, pole column part; 611, connecting groove; 62, sealing flange; 621, flange gap; 622, annular reinforcing rib; 63, pole plate part; 64, annular avoidance groove;
7, upper plastic member; 71, accommodating groove; 711, second through-hole;
8, lower plastic member; 9, second sealing ring; 10, positive electrode current collector disk; 101, insertion protrusion.

### DETAILED DESCRIPTION OF THE EMBODIMENT

In the description of the present application, unless otherwise specified and limited, the terms "link", "connect" or "fix" are to be construed in a broad sense, for example, as fixedly connected, detachably connected, or integrated; mechanically connected or electrically connected; directly connected to each other or indirectly connected to each other via an intermediary; or internally connected between two elements or interacted between two elements. Meanings of the preceding terms in the present application may be understood according to situations by an ordinary person in the art.

In the present application, unless otherwise specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In description of the embodiment, it should be understood that orientational or positional relationships represented by directional terms mentioned in the present application, such as up, down, left, right, etc., are orientational or positional relationships based on the drawings, and are merely for the convenience of describing the present application and simplifying the description, rather than indicating or implying that the device or element is intended to have a particular orientation, or is constructed and operated in a particular orientation, and therefore, should not be interpreted as a limitation of the present application. In addition, the terms "first" and "second" are only used to distinguish between the descriptions, and have no special meaning.

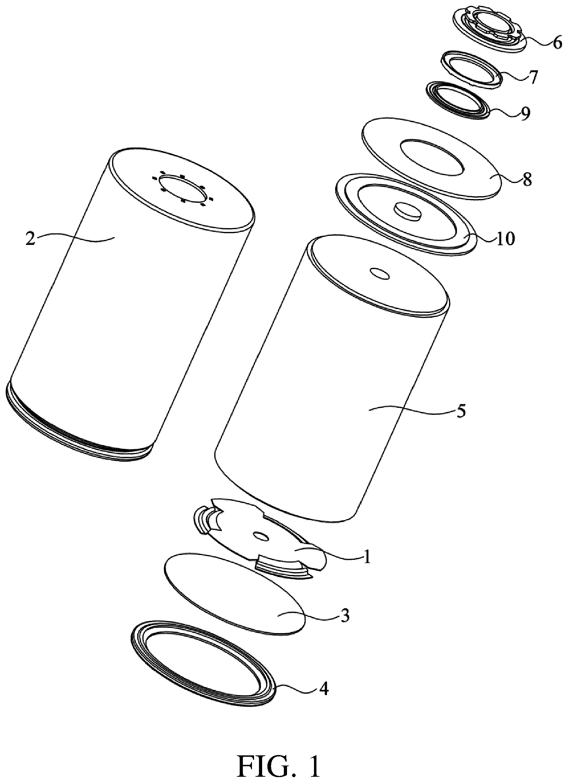

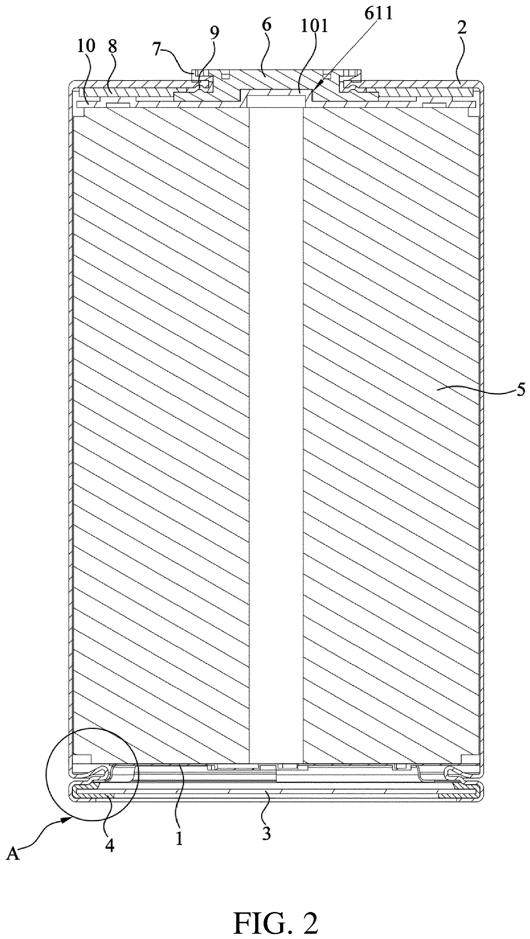

As shown in FIG. 1 and FIG. 2, a battery, in particular a large cylindrical battery, is provided in the embodiment, mainly including a battery cell 5, a negative electrode current collector disk 1, a positive electrode current collector disk 10, a terminal pole column 6, and a housing 2. The battery cell 5, the negative electrode current collector disk 1, and the positive electrode current collector disk 10 are all disposed inside the housing 2. The positive electrode current collector disk 10 is disposed on an upper end surface of the battery cell 5 and electrically connected with a positive tab of the battery cell 5. The negative electrode current collector disk 1 is attached on a lower end surface of the battery cell 5 and electrically connected with a negative tab of the battery cell 5, and the negative electrode current collector disk 1 is further welded with the housing 2. The terminal pole column 6 is disposed on the positive electrode current collector disk 10 and electrically connected with the positive electrode current collector disk 10. A first through-hole is defined on a top cover of an upper end surface of the housing 2, and the terminal pole column 6 is capable of passing through the first through-hole and extending out of the top cover of the housing 2.

In order to ensure that the terminal pole column 6 is connected with the positive electrode current collector disk 10 more stably, as shown in FIG. 2, a connecting groove 611 is defined on a side of the terminal pole column 6 towards the positive electrode current collector disk 10. An insertion protrusion 101 is disposed on a side of the positive electrode current collector disk 10 towards the terminal pole column 6, and the insertion protrusion 101 is inserted into the connecting groove 611, thereby realizing that the terminal pole column 6 is electrically connected with the positive electrode current collector disk 10, and improving stability and reliability of connection between the terminal pole column 6 and the positive electrode current collector disk 10.

As shown in FIG. 1 to FIG. 3, the battery further includes an upper plastic member 7, a lower plastic member 8, and a second sealing ring 9 so as to ensure an insulation characteristic between the terminal pole column 6 and the housing 2. The upper plastic member 7 is disposed on the top cover of the upper end surface of the housing 2. After the terminal pole column 6 passes through the first through-hole defined on the top cover of the upper end surface of the housing 2 and the upper plastic member 7, the terminal pole column 6 bends outward to form a flange and abuts against the upper plastic member 7, so that the upper plastic member 7 and the top cover of the housing 2 are firmly sleeved by the terminal pole column 6 to realize a sealing effect. Both the lower plastic member 8 and the second sealing ring 9 are sleeved on an outer periphery of the terminal pole column 6, the lower plastic member 8 is located between the positive electrode current collector disk 10 and an inner wall of the top cover of the housing 2, and the second sealing ring 9 is sandwiched between the terminal pole column 6, an inner peripheral wall of the first through-hole defined on the top cover of the housing 2, the lower plastic member 8, and the inner wall of the top cover of the housing 2. The upper plastic member 7, the second sealing ring 9, and the lower plastic member 8 cooperate with each other to completely separate the terminal pole column 6 from the housing 2, thereby ensuring the insulation characteristic between the terminal pole column 6 and the housing 2. In addition, by disposing the second sealing ring 9, the sealing effect between the terminal pole column 6 and the housing 2 is improved.

In the embodiment, the second sealing ring 9 and the lower plastic member 8 may be integrally formed, which not only facilitates processing, but also simplifies a number of elements, so that it is is more convenient to assemble the whole battery.

It should be noted that, the larger a distance in a vertical direction between the terminal pole column 6 and the top cover of the housing 2 in production processes of the battery, the larger an insulating medium between the terminal pole column 6 and the top cover of the housing 2, which is capable of improving a safety performance of the battery. Therefore, in the battery of related technology, in order to increase the insulating medium in the vertical direction between the terminal pole column 6 and the top cover of the housing 2, the terminal pole column 6 is generally far higher than a height of the upper plastic member 7, thereby greatly reducing a flatness and an aesthetic extent of the battery.

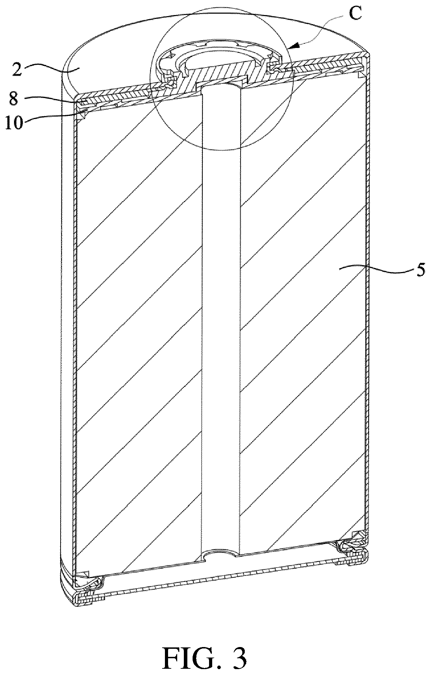

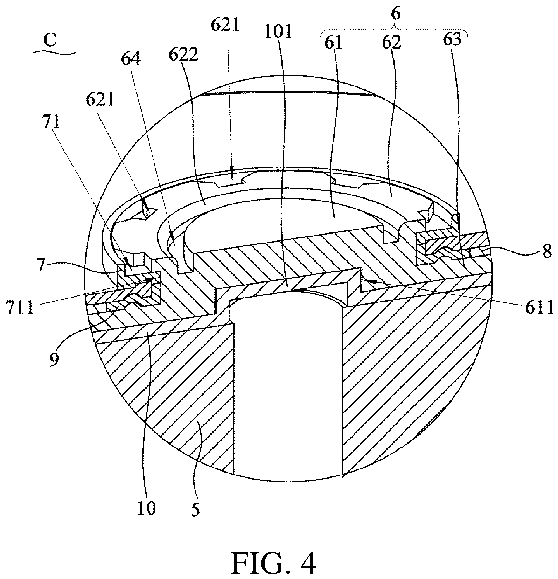

As shown in FIG. 3 and FIG. 4, after the terminal pole column 6 passes through the first through-hole defined in the top cover of the housing 2 and the upper plastic member 7, the terminal pole column 6 bends outward to form the flange and abuts against the upper plastic member 7, and an upper top surface of the terminal pole column 6 and an upper top surface of the upper plastic member 7 are flush with each other, so that not only a top of the battery is more flat and aesthetic, but also the insulating medium in the vertical direction between the terminal pole column 6 and the top cover of the housing 2 are increased, thereby improving the safety of the battery.

For example, as shown in FIG. 4, an accommodating groove 71 is defined on the upper top surface of the upper plastic member 7, and a second through-hole 711 is defined on a bottom wall of the accommodating groove 71. The terminal pole column 6 is capable of passing through the second through-hole 711 and bending outward to form the flange, and the terminal pole column 6 abuts against the bottom wall of the accommodating groove 71, so that the upper top surface of the terminal pole column 6 and the upper top surface of the upper plastic member 7 are flush with each other.

A specific structure of the terminal pole column 6 is described in combination with FIG. 4. As shown in FIG. 4, the terminal pole column 6 includes a pole column part 61, a pole plate part 63, and a sealing flange 62. The pole plate part 63 is connected with the pole column part 61, and the pole plate part 63 is located below the second sealing ring 9 and the lower plastic member 8. The sealing flange 62 is connected with the pole plate part 63 and disposed opposite to the pole plate part 63, the sealing flange 62 is disposed surrounding an outer periphery of the pole plate part 63, and the sealing flange 62 bents outward relative to the pole column part 61 and the pole plate part 63 and abuts against the bottom wall of the accommodating groove 71. It should be noted that, in the embodiment, the pole column part 61, the pole plate part 63, and the sealing flange 62 are integrally formed to simplify production processes of the terminal pole column 6, thereby reducing production cost of the terminal pole column 6. In addition, it should be noted that a connecting groove 611 is defined at a side of the pole column part 61 towards the positive electrode current collector disk 10.

For example, as shown in FIG. 4, a plurality of spaced flanging gaps 621 are defined at intervals on an outer peripheral wall of the sealing flange 62. When the sealing flange 62 bents outward to form the flange relative to the pole column part 61 and the pole plate part 63, a stretching deformation force of the outer peripheral wall of the sealing flange 62 during a bending process is reduced by the flanging gaps 621, so as to prevent cracks in the outer peripheral wall of the sealing flange 62 due to an excessive stretching force during the bending process, thereby ensuring reliability of the sealing flange 62 during the bending process.

For example, as shown in FIG. 4, annular avoidance grooves are defined between the sealing flange 62 and the pole column part 61, so that the sealing flange 62 and the pole column part 61 are disposed at intervals, which is more beneficial to bend outward the sealing flange 62 to flange relative to the pole column part 61 and pole plate part 63.

In the embodiment, as shown in FIG. 4, an annular reinforcing rib is disposed at a position where the sealing flange 62 bends outwards relative to the pole column part 61 and pole plate part 63, so that a structural strength of a bending position of the sealing flange 62 is improved to prevent the bending position from cracking during the bending process of the sealing flange 62, thereby improving a structural strength of the whole terminal pole column 6.

Since the negative electrode current collector disk 1 is electrically connected with the housing 2 by welding, and the negative electrode current collector disk 1 and the housing 2 are generally made of steel, the negative electrode current collector disk 1 is electrically connected with the housing 2 by welding. However, a welding mark may be formed on a surface of the steel after the steel is welded. Since the welding mark is different from a base material of the steel in material and self-chemical potentials, and galvanic corrosion is easy to occur in a presence of electrolytes or in a humid environment. If there is the humid environment during storage and transportation of batteries, a prerequisite of the galvanic corrosion is formed, the welding mark will be corroded, and corrosion of the welding mark will cause potential risks to an overall safety and service life of the batteries.

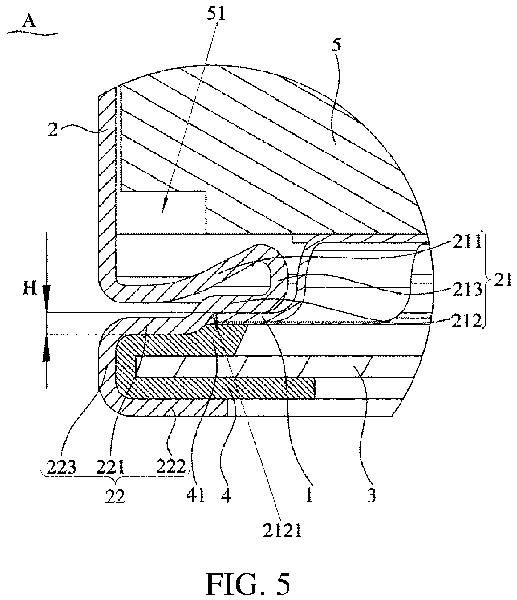

As shown in FIG. 5, before a lower end surface of the housing 2 of the battery provided by the present application is sealed, the negative electrode current collector disk 1 is welded with the housing 2 inside the housing 2, which can isolate the welding mark of the negative electrode current collector disk 1 and the housing 2 from an external environment outside the housing 2, thereby preventing the welding mark from being corroded in the humid environment, and ensuring the safety and the service life of the battery.

For example, as shown in FIG. 5, the battery further includes a sealing element 3, and a first rolling groove 21 and a second rolling groove 22 communicated with each other are sequentially defined at and recessed from a sealing end of the housing 2. The first rolling groove 21 is bent towards inside of the housing 2, and the second rolling groove 22 is bent towards outside of the housing 2. The first rolling groove 21 is welded with the negative electrode current collector disk 1, the sealing element 3 is accommodated in the second rolling groove 22 to seal an opening of the housing 2, and to seal the welding mark of the first rolling groove 21 and the negative electrode current collector disk 1 inside the housing 2, so that the welding mark of the negative electrode current collector disk 1 and the housing 2 are isolated from the external environment outside the housing 2. The sealing end of the housing 2 is grooved, and the sealing element 3 is accommodated in the second groove 22, thereby not only fixing the sealing element 3 stably, but also greatly improving a sealing effect of the sealing end of the housing 2.

In the embodiment, the sealing element 3 is an explosion-proof sheet. The explosion-proof sheet is disposed to seal the opening of the housing 2. When a pressure inside the housing 2 is too large, the explosion-proof sheet can be broke through, thereby playing a role in relieving the pressure inside the housing 2, and preventing a danger of explosion of the battery.

For example, as shown in FIG. 5, the battery further includes a first sealing ring 4. The first sealing ring 4 is sleeved an outer periphery of the sealing element 3, and the first sealing ring 4 is sandwiched between the sealing element 3 and the second rolling groove 22 to improve the sealing effect of the sealing end of the housing 2.

Specific structures of the first groove 21 and the second groove 22 are described in combination with FIG. 5. As shown in FIG. 5, the first rolling groove 21 includes a first rolling groove edge 211, a first bent groove wall 213, and a second rolling groove edge 212 connected in sequence. The second rolling groove edge 212 is disposed opposite to the first rolling groove edge 211. The second rolling groove 22 includes a third rolling groove edge 221, a second bent groove wall 223, and a fourth rolling groove edge 222 connected in sequence. The third rolling groove edge 221 is connected with the second rolling groove edge 212. The third rolling groove edge 221 is disposed opposite to the first rolling groove edge 211. The fourth rolling groove edge 222 is disposed opposite to the third rolling groove edge 221. The sealing element 3 is accommodated between the third rolling groove edge 221 and the fourth rolling groove edge 222, so that the sealing element 3 is capable of covering a lower side of the third rolling groove edge 221 to seal the first rolling groove 21.

In the embodiment, as shown in FIG. 5, a welding step 2121 is provided on the second rolling groove edge 212, and the negative electrode current collector disk 1 is lap-jointed and welded with the welding step 2121. By providing the welding step 2121 on the second groove edge 212, a welding seam or a welding lap joint position may be clearly seen during welding the negative electrode current collector disk 1 and the housing 2, so that a welding misalignment is prevented, and a virtual welding and a welding through are also prevented, thereby improving a process yield, and ensuring a consistency of a fast charging performance of the battery. In addition, the welding step 2121 may also be used as a pressing area for the negative electrode current collector disk 1 during welding, which is convenient for welding operation.

For example, as shown in FIG. 5, a depth H of the welding step 2121 is greater than or equal to a height of the welding mark formed after welding the negative electrode current collector disk 1, so that the depth H of the welding step 2121 may accommodate the height of the welding mark formed after welding the negative electrode current collector disk 1, to make a welding position of the negative electrode plate 1 more flat.

For example, as shown in FIG. 5, the first sealing ring 4 is provided with a protective tongue 41 extending towards a central direction of the housing 2, where the protective tongue 41 is located between the sealing element 3 and the welding step 2121, and the protective tongue 41 and the welding mark formed after welding the negative electrode current collector disk 1 are spaced from each other, so that the protective tongue 41 is capable of protecting a side of the welding mask during a process of sealing the opening of the battery, a stress applied to the welding position of the first sealing ring 4 may be reduced, thereby protecting the welding position from cracking, and ensuring stability and reliability of the welding.

It should be noted that the welding mark formed by welding the negative electrode current collector disk 1 and the welding step 2121 is designed not to penetrate the welding position of the welding step 2121, so as to prevent the welding position of the welding step 2121 from being welding through, thereby improving a process yield.

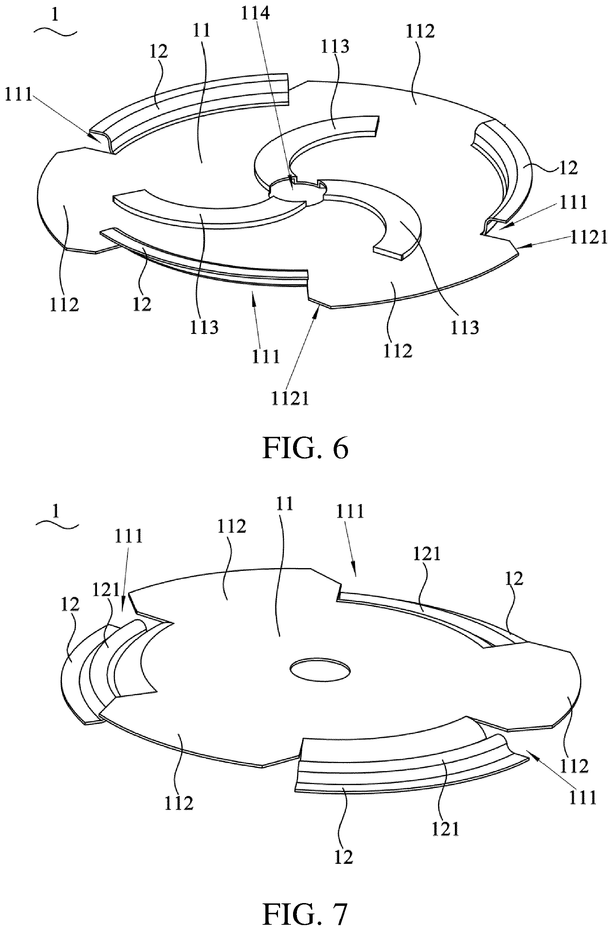

A specific structure of the negative electrode current collector disk 1 is described in combination with FIG. 6 and FIG. 7. As shown in FIG. 6 and FIG. 7, the negative electrode current collector disk 1 includes a tab connector 11 and a housing connector 12. The tab connector 11 is electrically connected with the battery cell 5, the housing connector 12 is connected with the tab connector 11, and the housing connector 12 is lap-jointed and welded on the welding step 2121.

For example, as shown in FIG. 7, a buffer ripple 121 is defined on the housing connector 12 to ensure stability of the housing connector 12 and make the housing connector 12 have certain buffer elasticity. After welding the housing connector 12 with the welding step 2121, the buffer ripple 121 is capable of effectively absorbing a compressive force upon sealing during a process of sealing the battery, thereby reducing a pressure of the housing 2 on the negative electrode current collector disk 1, further reducing a pressure of the negative electrode current collector disk 1 on the battery cell 5, and improving the safety of the battery.

In addition, it should be noted that during the production processes of the battery, especially when the battery is packaged, the first rolling groove 21 at a sealing position of the battery is pressed down. Although the housing connector 12 has a certain buffer elasticity to reduce the pressure of the housing 2 on the negative electrode current collector disk 1, the housing 2 may still cause a certain pressure on the negative electrode current collector disk 1, so that the negative electrode current collector disk 1 squeezes the battery 5. Furthermore, the battery 5 is relatively fragile, so that the negative electrode current collector disk 1 easily squeezes and damages the battery cell 5, resulting in decrease of the process yield.

As shown in FIG. 6 and FIG. 7, a plurality of battery cell avoidance grooves 111 are defined at intervals on an outer peripheral wall of the tab connector 11, a tab extending end 112 is sandwiched and formed between two adjacent ones of the battery cell avoidance grooves 111, an isolation space is defined between the tab extending end 112 and the battery cell 5, and a side of each of the plurality of battery cell avoidance grooves 111 away from the battery cell 5 is opposite provided with the housing connector 12. This arrangement mentioned above reduces a bonding area between an outer periphery of the tab connector 11 and the battery cell 5, so as to prevent the tab connector 11 from squeezing and damaging the battery cell 5 caused by pressing down of the first rolling groove 21 when the battery is packaged, thereby improving the process yield.

For example, as shown in FIG. 6, a chamfer 1121 is defined on a corner of the tab extending end 112 to deburr, which not only improves the aesthetic extent of the entire tab connector 11, but also prevents sharp parts of the tab connector 11 from scratching operators.

In the embodiment, as shown in FIG. 5, an annular groove 51 is defined on an outer periphery of the battery cell 5 to form an isolation space between the tab extending end 112 and the battery cell 5, thereby preventing the tab connector 11 from squeezing and damaging the battery cell 5.

It should be noted that, in the embodiment, three battery cell avoidance grooves 111 are provided, and correspondingly, three housing connectors 12 are provided. The housing connectors 12 and the tab extending ends 112 are staggered along a circumferential direction of the tab connector 11. In other embodiments, the number of the battery cell avoidance grooves 111 and the number of the housing connectors 12 may be set according to requirements.

For example, the outer peripheral wall of the tab connector 11 is punched and bent towards a direction away from the battery cell 5 to form the housing connector 12, so that the plurality of battery cell avoidance grooves 111 are defined in a direction of the housing connector 12 towards the battery cell 5. This arrangement is convenient for processing the negative electrode current collector disk 1, so that the negative electrode current collector disk 1 is integrally formed and a structural strength of the negative electrode current collector disk 1 is further improved.

For example, as shown in FIG. 6, a reinforcing bump 113 is formed on a side of the tab connector 11 towards the sealing element 3, and a height of the reinforcing bump 113 in a direction adjacent to the sealing element 3 is lower than a height of the housing connector 12 in a direction adjacent to the sealing element 3. By disposing the reinforcing bump 113, not only the structural strength of the negative electrode current collector disk 1 is improved, but also the designed reinforcing bump 113 may be used as a welding boundary when the negative electrode current collector disk 1 is laser welded. In addition, the height of the reinforcing bump 113 in the direction adjacent to the sealing element 3 is lower than the height of the housing connector 12 in the direction adjacent to the sealing element 3, so that the reinforcing protrusion 113 may not abut against the sealing element 3 when the sealing element 3 is installed to seal the housing 2, thereby preventing the reinforcing protrusion 113 from squeezing and damaging to the sealing element 3, and ensuring a blasting accuracy of the sealing element 3.

For example, the reinforcing bump 113 is arc-shaped, and a plurality of reinforcing bumps 113 are provided. The plurality of reinforcing protrusions 113 are arranged at intervals surrounding a circumferential direction of the tab connector 11. In the embodiment, three reinforcing bumps 113 are provided. In other embodiments, the number of the reinforcing bumps 113 may be provided according to requirements, for example, two, four, or, even more.

For example, as shown in FIG. 6, an avoidance hole 114 is defined at a center of a circle of the tab connector 11, the plurality of reinforcing bumps 113 are arranged at intervals surrounding a circumferential direction of the avoidance hole 114, and the avoidance hole 114 is disposed opposite to a perforation hole in a middle of the battery cell 5, so that it is convenient for a welding tool to pass through the avoidance hole 114 and the perforation hole in the middle of the battery cell 5 in sequence to weld the terminal pole column 6 on the top of the battery with the positive electrode current collector disk 10.

The present application further provides a battery module. By adopting the battery mentioned above, the welding mark is prevented from being corroded in the humid environment, and a safety and service life of the battery module is ensured.

The present application further provides a battery pack. By adopting the battery module mentioned above, the welding mark is prevented from being corroded in the humid environment, and a safety and service life of the battery pack is ensured.

A battery provided in the embodiment is basically same as the battery provided in the embodiment aforementioned, and a difference between the battery provided in the embodiment and the embodiment aforementioned is that the welding positions of the negative electrode current collector disk 1 with the first rolling groove 21 are different.

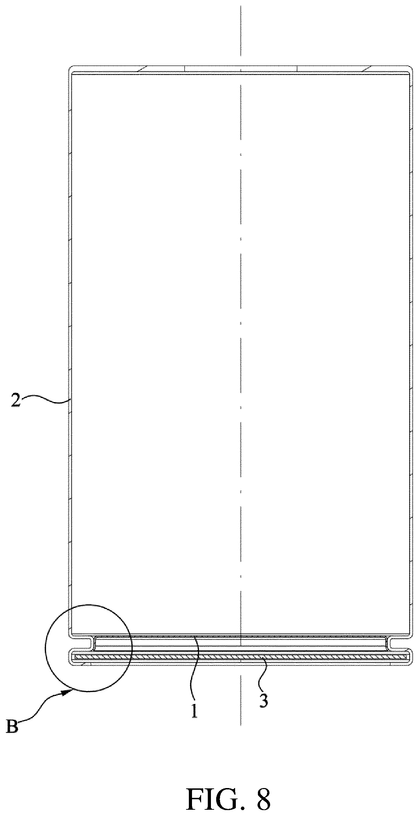

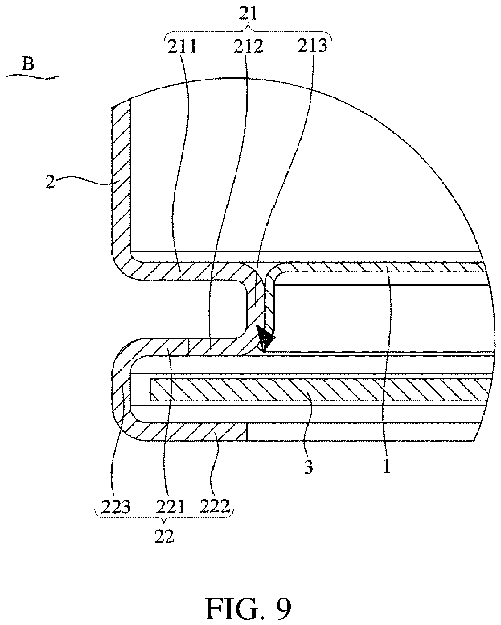

As shown in FIG. 8 and FIG. 9, in the embodiment, the first bent groove wall 213 is welded with the housing connector 12 of the negative electrode current collector disk 1. The welding mark formed by welding the housing connector 12 and the first bent groove wall 213 is designed not to penetrate a welding position of the first bent groove wall 213, so as to increase a thickness of the housing 2 when welding, thereby improving stability and reliability of the welding.

For example, a material of the housing 2 in the embodiment of the present application may be a low carbon steel material with nickel plating on a surface, where a thickness of the plated nickel ranges from 0.5 µm to 5 µm. The material of the housing 2 may also be a stainless steel, for example, 304 stainless steel.

For example, a material of the negative electrode current collector disk 1 in an embodiment of the present application may be copper, may also be nickel-plated copper, and, may also be steel.

A nickel-plated layer on the negative electrode current collector disk 1 and a nickel-plated layer on the nickel-plated housing 2 are made of same materials, which is convenient for welding and may also reduce an internal resistance of the material. A base material of low carbon steel has a high resistivity, by plating a nickel layer on both a positive surface and a negative surface of the base material of low carbon steel, it is convenient for the base material of low carbon steel to be welded with the (nickel-plated) negative electrode current collector disk 1, and a resistance is reduced at a same time. A resistivity of the stainless steel is higher. However, after the stainless steel is welded with the negative electrode current collector disk 1 (nickel plated), the (nickel-plated) negative electrode current collector disk 1 is effectively prevented from being corroded. A resistivity of a base material of copper is lower, by plating the nickel layer on both a front surface and a back surface of the base material of copper, it is convenient for the base material of copper to be welded with the (nickel-plated) housing 2. At the same time, nickel also contributes to make the welding spot positions corrosion resistant.

## Claims

1. A battery, comprising:
a housing (2); and
a negative electrode current collector disk (1) disposed inside the housing (2), wherein the negative electrode current collector disk (1) is welded with the housing (2) inside the housing (2) before the housing (2) is sealed.

2. The battery of claim 1, further comprising a sealing element (3), wherein a first rolling groove (21) and a second rolling groove (22) communicated with each other are sequentially defined at and recessed from a sealing end of the housing (2), the first rolling groove (21) is bent towards inside of the housing (2), and the second rolling groove (22) is bent towards outside of the housing (2), the first rolling groove (21) is welded with the negative electrode current collector disk (1), and the sealing element (3) is accommodated in the second rolling groove (22) to seal an opening of the housing (2), and to seal a welding mark of the first rolling groove (21) and the negative electrode current collector disk (1) inside the housing (2).

3. The battery of claim 2, wherein the first rolling groove (21) comprises a first rolling groove edge (211), a first bent groove wall (213), and a second rolling groove edge (212) connected in sequence, and the second rolling groove edge (212) is disposed opposite to the first rolling groove edge (211); and
the second rolling groove (22) comprises a third rolling groove edge (221), a second bent groove wall (223), and a fourth rolling groove edge (222) connected in sequence, the third rolling groove edge (221) is connected with the second rolling groove edge (212), the third rolling groove edge (221) is disposed opposite to the first rolling groove edge (211), the fourth rolling groove edge (222) is disposed opposite to the third rolling groove edge (221), and the sealing element (3) is accommodated between the third rolling groove edge (221) and the fourth rolling groove edge (222).

4. The battery of claim 3, wherein the first bent groove wall (213) is welded with the negative electrode current collector disk (1).

5. The battery of claim 3, wherein a welding step (2121) is provided on the second rolling groove edge (212), and the negative electrode current collector disk (1) is lap-jointed and welded with the welding step (2121).

6. The battery of claim 5, wherein a depth of the welding step (2121) is greater than or equal to a height of the welding mark formed after welding the negative electrode current collector disk (1).

7. The battery of claim 5, further comprising:
a first sealing ring (4), sleeved on an outer periphery of the sealing element (3), and sandwiched between the sealing element (3) and the second rolling groove (22).

8. The battery of claim 7, wherein the first sealing ring (4) is provided with a protective tongue (41) extending towards a central direction of the housing (2), and wherein the protective tongue (41) is located between the sealing element (3) and the welding step (2121), and the protective tongue (41) and the welding mark formed after welding the negative electrode current collector disk (1) are spaced from each other.

9. The battery of any one of claims 3-8, wherein the welding mark formed by welding the negative electrode current collector disk (1) and the first rolling groove (21) is designed not to penetrate a welding position of the first rolling groove (21).

10. The battery of any one of claims 2-8, wherein the sealing element (3) is an explosion-proof sheet.

11. The battery of any one of claims 2-8, wherein the negative electrode current collector disk (1) comprises:
a tab connector (11); and
a housing connector (12) connected with the tab connector (11), and welded with the first rolling groove (21).

12. The battery of claim 11, wherein a buffer ripple (121) is defined on the housing connector (12).

13. The battery of claim 11, further comprising a battery cell (5) disposed inside the housing (2) and located above the negative electrode current collector disk (1), wherein the tab connector (11) is electrically connected with the battery cell (5), a plurality of battery cell avoidance grooves (111) are defined on an outer peripheral wall of the tab connector (11), a tab extending end (112) is sandwiched and formed between two adjacent ones of the battery cell avoidance grooves (111), an isolation space is defined between the tab extending end (112) and the battery cell (5), and a side of each of the plurality of battery cell avoidance grooves (111) away from the battery cell (5) is opposite provided with the housing connector (12).

14. The battery of claim 13, wherein the outer peripheral wall of the tab connector (11) is punched and bent towards a direction away from the battery cell (5) to form the housing connector (12), so that the plurality of battery cell avoidance grooves (111) are defined in a direction of the housing connector (12) towards the battery cell (5).

15. The battery of claim 13, wherein a reinforcing bump (113) is formed on a side of the tab connector (11) towards the sealing element (3), a height of the reinforcing bump (113) in a direction close to the sealing element (3) is lower than a height of the housing connector (12) in a direction close to the sealing element (3).

16. The battery of claim 1, wherein a material of the housing (2) comprises a nickel-plated low carbon steel or a stainless steel.

17. The battery of claim 16, wherein a thickness of a nickel plating layer of the nickel-plated low carbon steel ranges from 0.5 um to 3 um.

18. The battery of claim 1, wherein a material of the negative electrode current collector disk (1) comprises copper, nickel-plated copper, or steel.

19. A battery module, comprising the battery of any one of claims 1-18.

20. A battery pack, comprising at least one group of the battery module in claim 19.
